(19) **Europäisches Patentamt**

**European Patent Office**

**Office européen des brevets**

(11) **EP 0 871 175 B1**

(12) **EUROPEAN PATENT SPECIFICATION**

(45) Date of publication and mention
of the grant of the patent:
**02.02.2005 Bulletin 2005/05**

(51) Int Cl.⁷: **G11B 23/087**

(21) Application number: **98106570.9**

(22) Date of filing: **09.04.1998**

(54) **Cartridge for magnetic recording medium**

Kassette für Magnetaufzeichnungsträger

Cassette pour support d'enregistrement magnétique

(84) Designated Contracting States:
**DE GB**

(30) Priority: **11.04.1997 JP 9330997**

(43) Date of publication of application:
**14.10.1998 Bulletin 1998/42**

(73) Proprietor: **TDK Corporation**
**Chuo-ku, Tokyo (JP)**

(72) Inventors:
 • **Kutsukake, Jin**
  **Saku-shi, Nagano (JP)**
 • **Momoi, Akio**
  **Saku-shi, Nagano (JP)**
 • **Okamura, Masatoshi**
  **Saku-shi, Nagano (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 214 604**    **EP-A- 0 481 468**
**EP-A- 0 501 405**    **US-A- 5 354 393**

 • PATENT ABSTRACTS OF JAPAN vol. 010, no.
  276 (C-373), 10 September 1986 -& JP 61 097356
  A (SEIKO EPSON CORP), 15 May 1986 -&
  DATABASE WPI Section Ch, Week 8626 Derwent
  Publications Ltd., London, GB; Class A23, AN
  86-165235 XP002084523 & JP 61 097356 A
 • PATENT ABSTRACTS OF JAPAN vol. 008, no.
  245 (P-312), 10 November 1984 & JP 59 117768
  A (SONY KK), 7 July 1984
 • PATENT ABSTRACTS OF JAPAN vol. 018, no.
  159 (P-1711), 16 March 1994 & JP 05 325470 A
  (KAO CORP), 10 December 1993

**Description**

The present invention relates to a cartridge for a magnetic recording medium or the like.

Most of magnetic recording magnetic media which records and reproduces by use of magnetism are received in cases called cartridges, and in use, each medium is loaded together with the cartridge in an apparatus. This cartridge prevents rubbish or dust from adhering to the recording medium, or prevents the recording medium from being damaged. The cartridge contributes to the improvement of the reliability of the recording medium.

Signal recording/reproducing in such a recording medium is performed through a magnetic head. At that time, in the point of view to ensure the reliability of recording/reproducing, it is important to always keep the positional relationship constant between the recording medium and the magnetic head. To this end, not to say, the recording medium should run stably. In the case of a tape, various devices in smoothness of the surface, strength, flexibility, and so on are given to the surface of the tape. However, there are factors to disturb the positional relationship between the recording medium and the magnetic head, for example, such as vibrations given from the outside of the recording/reproducing apparatus, and vibrations generated from a motor or the like in the recording/reproducing apparatus itself. Without satisfactory countermeasures against these factors of disturbance, superior recording/reproducing cannot be performed. Particularly in a recording/reproducing apparatus used in a car or the like where violent vibrations are generated from the outside, countermeasures to prevent vibrations have been taken in the apparatus per se, but a countermeasure to prevent vibrations in the cartridge per se also becomes important.

The following proposals using high specific gravity resin have been made as measures to satisfy reproducibility of sound or the like, high functionality of a sense of depth or the like, and high dignity.

Unexamined Japanese Patent Publication (kokai) No. Hei-5-325470 has proposed a magnetic recording vessel molded out of thermoplastic resin containing 1 to 30% by weight of barium sulfate. The specific gravity of the composite resin containing barium sulfate added thereto by such a quantity is within a range of 1.1 to 1.6. In addition, Unexamined Japanese Patent Publication (kokai) No. Hei-5-307859 discloses an example of a video cassette formed from composite resin which contains 25% to 35% by weight of barium sulfate and which has specific gravity of 1.3 to 1.4. According to the study of the present inventor, such specific gravity cannot exert a sufficient effect to prevent vibrations.

Examined Japanese Patent Publication No. Hei-4-39756 discloses an example of a cassette half formed from polypropylene resin composition in which inorganic reinforcer occupies 45% or less by volume while 20 to 100% by weight of the inorganic reinforcer is zinc oxide, and the specific gravity of which is 2 or more. In addition, Examined Japanese Patent Publication No. Hei-6-34329 discloses an example of composite plastic material in which at least one of calcium carbonate and barium sulfate is mixed at a weight ratio of 45% to 65%. These publications disclose the limitations of the addings depend on moldability in injection molding. However, according to the study of the present inventors, in the case where a molding such as a magnetic recording medium cartridge of a complicated structure having a lot of thin ribs or the like is provided, the higher the fluidity of resin is, the easier it is to produce the molding with high dimensional accuracy, high appearance accuracy, high productivity, and so on. The amount of the inorganic reinforcer disclosed in the above publications are too much for composite resin of a magnetic recording medium cartridge.

Unexamined Japanese Patent Publication (kokai) No. Sho-59-117768 discloses an example of cassette molded out of composite resin having specific gravity of 1.5 to 2.2. The above publication discloses that oxide zinc, barium sulfate, lead sulfate, etc. may be used as the composite component, and may be adjusted within a range of from 40% to 80% by weight. However, specific examples are not shown.

Cartridges for audio tapes or the like are generally formed by injection molding. Injection molding is performed by injecting molding resin into a mold. When injection molding is performed with low-fluidity resin, it is necessary to increase temperature to thereby increase the fluidity, or to increase pressure to thereby forcibly push the resin into every corner of the mold. However, such a molding deteriorates in accuracy of dimension or shape. Therefore, in order to mold a product such as a magnetic recording medium cartridge which has a complicated and fine structure and which is required to be molded accurately, it is very important that the molding resin flows easily.

If molding is to be made with low-fluidity resin, some problem occurs in appearance, warpage, dimension, etc. so as to make the productivity very low. Particularly in a recording medium cartridge which is limited in the position and number of gates in view of the appearance of a product which has a great number of thin ribs and which requires high dimensional accuracy, it is necessary to use resin which can be molded as easily as possible. Even a slight difference in the above-mentioned fluidity of resin gives a very large influence to the appearance or dimensional characteristic of a product, and further to the productivity.

US-A-5354393 relates to an injection molding method for manufacturing a magnetic tape cassette incorporating and holding therein a tape winding member with a magnetic tape wound therearound in a cassette case formed from a synthetic resin material mixed with a conductive filler.

JP-A-61 097356 relates to a resin composition which is lowly shrinking and has excellent dimensional stability, processability, strength and a high specific gravity, consisting of an aromatic polyamide resin, 10 to 40% by volume of tungsten powder having a particle size of 0.1 to 20 μm, 0 to 30% by volume of carbon filler, 0 to 30% by volume of glass fiber, 0 to 30% by volume of potassium titanate whisker and 0.001 to 5% volume of a lubricant.

There are a great number of proposals to improve vibration proof by means of specific gravity of a molded body or adding effect of a filler, as has been described above.

However, such conventional techniques have not made enough explanation about the reduction of fluidity of resin, that is, moldability of resin caused by the adding of the filler, and there is nothing to satisfy both the vibration proof and the moldability.

In addition, when the amount of the filler increases, the molded body becomes so brittle that the impact resistance is reduced.

It was the object of the present invention to provide a product formed from high-gravity resin, which is high in reliability, which satisfies reproducibility of sound or the like and high functionality of a sense of depth or the like, and which is superior in dimensional accuracy and appearance dignity.

This object is achieved by a cartridge comprising a composite resin in which a filler is mixed with the resin at a ratio of 16 parts or less by volume to 100 parts by volume of resin, and which has the specific gravity of 1.8 or more.

According to the present invention, by adding a small quantity of filler to increase the specific gravity of composite resin, it is possible to provide a magnetic recording medium cartridge which is superior in productivity and high in reliability.

In the accompanying drawings:

    Fig. 1 is a perspective view illustrating a lower case of an audio tape;
    Fig. 2 is a perspective view illustrating an upper case of the audio tape;
    Fig. 3 is a graph showing vibration properties of a cartridge in an embodiment;
    Fig. 4 is a graph showing vibration properties of a cartridge in a comparative example.

Detailed description of the present invention will be described as follows referring to the accompanying drawings.

A number of proposals using high-gravity resin have been made as measures to satisfy the reproducibility of sound or the like, the high functionality of a sense of depth or the like, and the high dignity, as mentioned above. Also according to the study of the present inventors, it was confirmed that such an effect can be obtained if a cartridge was formed from resin having specific gravity of 1.8 or more.

However, if a filler is mixed to resin to increase the specific gravity of the resin, the fluidity of composite resin which is a mixture of the resin and the filler decreases as the amount of the filler mixed into the resin increases. The moldability also decreases at the same time. This fluidity of the resin has a close relation not with the weight but with the volume of the filler mixed thus. As the result of deep study of the present inventor, it is preferable to limit the ratio of the filler contained in the composite resin to 20 parts or less by volume to 100 parts by volume of the resin in order to keep superior the moldability of a product having a fine structure. It was ascertained that, if the volume of the filler exceeded 20 parts by volume, molding could be performed under high molding pressure or high molding temperature, but the molded product was low in its dimensional accuracy or appearance dignity, and the cycle time for molding was prolonged. In addition, if a large amount of hard filler is mixed into resin, a mold is worn conspicuously, and the productivity is further lowered.

In addition, when a powder filler is added to resin, composite resin becomes harder and brittler as the volume of the filler increases. In order to form a thin columnar body such as a guide roller shaft of an audio-tape cartridge, it is necessary to take such solid state properties of composite resin into consideration thoroughly. To obtain sufficient strength required for the guide roller shaft of an audio-tape cartridge, it is necessary to limit the ratio of the filler in the composite resin to 16 parts or less by volume to 100 parts by volume of the resin.

As has been described above, according to the result of study by the present inventor, a cartridge molded out of composite resin in which 16 parts or less by volume of filler is mixed into 100 parts by volume of resin, and the specific gravity of which is 1.8 or more, is superior in vibration proof, good in accuracy and productivity, and also excellent in reliability.

However, conventional techniques have disclosed nothing specifically about such conditions and fillers. That is, it is the present situation that not all of the vibration proof, moldability and reliability can be satisfied at the same time by the fillers (calcium carbonate, barium sulfate, lead sulfate, oxide zinc, etc.) disclosed in the conventional techniques.

The filler suitable to embody the present invention is powder of an element or compound the specific gravity of which is 6.5 or more. In addition, a magnetic recording medium cartridge according to the present invention is used in ordinary life. Therefore, the element or compound used as the filler should not have any radioactivity and toxicity. Further, in order to keep high reliability even in the case of long-term preservation or being touched by hand, it is preferable that the material is superior in corrosion resistance. Examples of the materials which satisfy such conditions and which are industrially available are stainless steel powder and tungsten powder.

Preferably, the average particle size of the filler is in a range of from 1 to 20 μm (the maximum particle size is 50 μm). If the particle size exceeds the above-mentioned region, the wear of a mold is increased, while if the particle size is too small, dispersion into resin becomes so poor that there arise problems such as the wear of the mold, the blocking of a gate, and so on.

Further, when surface treatment with a lubricant, a silane coupling agent or a titanium coupling agent is effected on the filler, the conformability of the filler to the resin is improved, so that it is possible to prevent the reduction of the solid state properties such as impact strength of the composite resin caused by the loading of the filler and improve the fluidity of the composite resin.

There is no special limitation to the resin used in the present invention so long as it is resin which is generally used in injection molding and which satisfies the above-mentioned conditions. Preferable resins used in the present invention are PS, ABS, AS (SAN), PMMA, PC and the like.

EXAMPLES

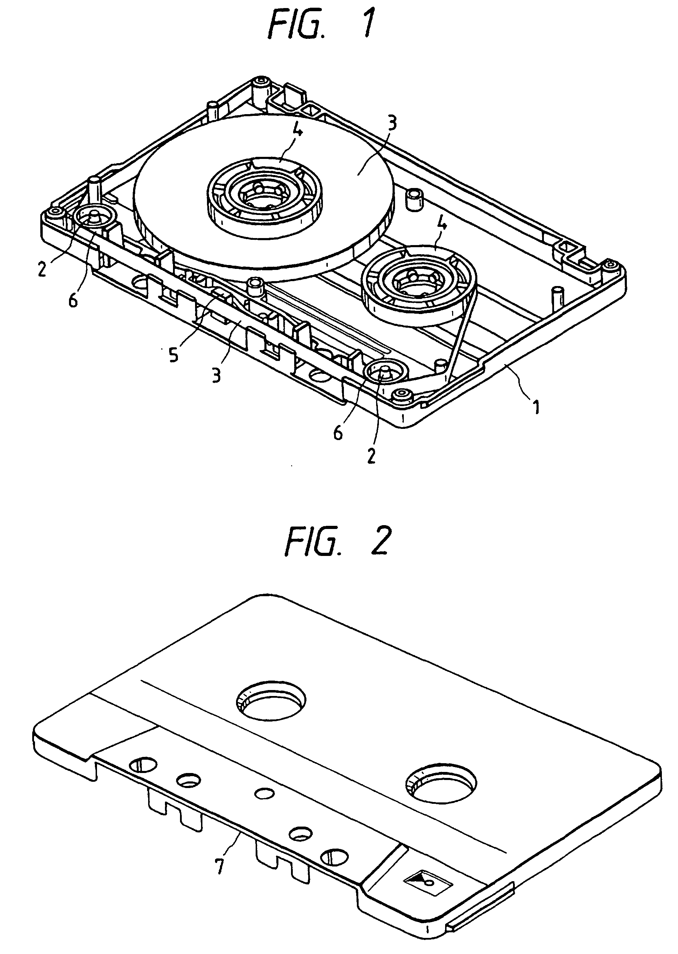

Examples will be described, by way of example, about an audio-tape cartridge. The audio-tape cartridge is generally constituted by upper and lower cases formed by injection molding. Fig. 1 is a perspective view of the lower case of the cartridge, and Fig. 2 is a perspective view of the upper case of the cartridge.

A tape 3 wound on a supply hub 4 is taken up onto a take-up hub 4 through a guide roller 6, a pad 5 and another guide roller 6 which are mounted on a guide roller shaft 2 molded integrally with the lower case 1. A recording/reproducing magnetic head contacts with the tape 3 in the portion of the pad. When vibrations are given to the upper case 7 or the lower case 1 of the cartridge, the vibrations are propagated to the pad 5, thereby making the contact between the tape 3 and the magnetic head unstable.

Upper cases and lower cases of audio-tape cartridges were molded out of the following materials. The used materials, the evaluation conditions, and the evaluation results (Table 1) are shown as follows.

Resin

polystyrene resin (hereinafter abbreviated to 'PS')

Sorts of Filler

W:      tungsten powder (specific gravity: 19.3)
SUS:    stainless steel powder (specific gravity: 7.9)
BS:     barium sulfate powder (specific gravity = 4.5)
Cu:     copper power (specific gravity = 9.0)
Fe:     iron power (specific gravity = 7.9)
none:   no filler (specific gravity = 1.05)

Quantity of Mixed Filler

parts by volume of filler to 100 parts by volume of resin

$$\text{composite resin specific gravity} = (\text{PS weight} + \text{filler weight})/(\text{PS volume} + \text{filler volume})$$

Vibration Proof

Sonic wave of 120 Hz was radiated to a cartridge fixed at its one end, from a speaker apart by 1 cm from the cartridge, and vibrations in the surface of the cartridge on the opposite side to the speaker were measured.

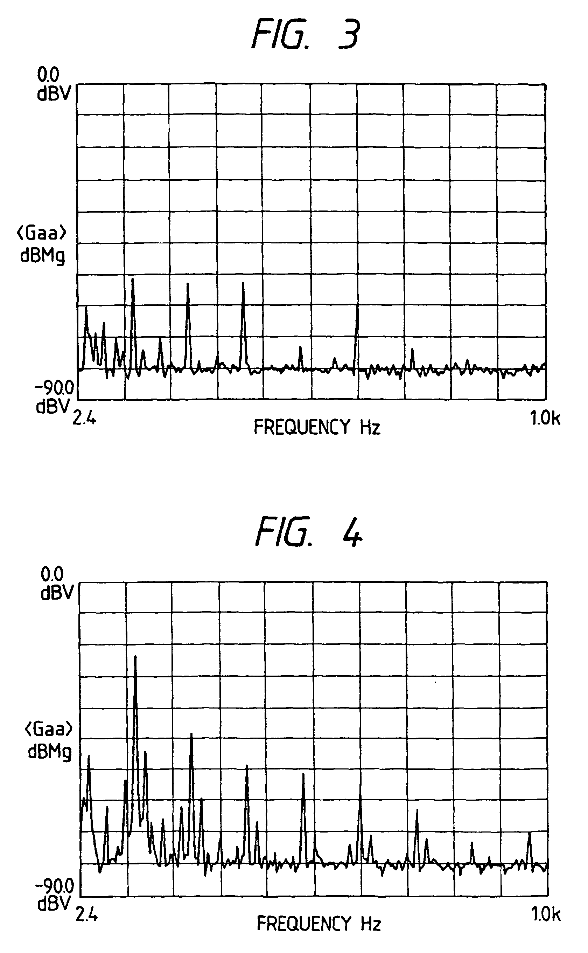

O:      shown in Fig. 3 (Sample 5 in Example).
×:      shown in Fig. 4 (Sample 13 in Comparative Example).

Moldability

O:     superior (in a similar level to PS)
Δ:     a little worse in productivity
✕:     extremely worse in productivity

Resin Strength

The guide roller shaft 2 of the audio cassette in Fig. 1 was pushed, and the strength when the shaft 2 was broken was measured by a spring balance.

O:     1,000 gf or more
Δ:     900 gf or more
✕:     less than 900 gf

Corrosion Resistance

5% salt spray test based on JIS-Z2371 (48 hours).

O:     no rust was produced

✕:     rust was produced

Mold Wear

Damage of the mold surface was observed after 1,000 shots of molding were performed.

O:     occurrence of damage few
Δ:     occurrence of damage some
✕:     occurrence of damage much

TABLE 1

| Sample | Filler | | Gravity of Composite Resin | Vibration Proof | Moldability | Resin Strength | Corrosion Resistance | Mold Wear |
|---|---|---|---|---|---|---|---|---|
| | Sort | Amount | | | | | | |
| 1* | W | 1.4 | 1.3 | ✕ | O | O | O | O |
| 2* | | 2.5 | 1.5 | Δ | O | O | O | O |
| 3 | | 4.3 | 1.8 | O | O | O | O | O |
| 4 | | 5.5 | 2.0 | O | O | O | O | O |
| 5 | | 12.0 | 3.0 | O | O | O | O | O |
| 6 | | 15.5 | 3.5 | O | O | O | O | O |
| 7* | | 19.3 | 4.0 | O | O | Δ | O | O |
| 8* | | 23.3 | 4.5 | O | Δ | ✕ | O | Δ |
| 9* | | 27.6 | 5.0 | O | ✕ | ✕ | O | ✕ |

The mark * designates a comparative example.

TABLE 1  (continued)

| Sample | Filler | | Gravity of Composite Resin | Vibration Proof | Moldability | Resin Strength | Corrosion Resistance | Mold Wear |
|---|---|---|---|---|---|---|---|---|
| | Sort | Amount | | | | | | |
| 10 | SUS | 7.0 | 1.5 | Δ | O | O | O | O |
| 11 | | 14.2 | 1.9 | O | O | O | O | O |
| 12* | | 20.0 | 2.2 | O | O | Δ | O | O |
| 13* | Nothing | -- | 1.05 | × | O | O | O | O |
| 14* | BS | 15.0 | 1.5 | Δ | O | O | O | O |
| 15* | | 27.8 | 1.8 | O | × | × | O | × |
| 16* | | 38.0 | 2.0 | O | × | × | O | × |
| 17* | Cu | 13.6 | 2.0 | O | O | O | × | O |
| 18* | Fe | 16.1 | 2.0 | O | O | Δ | × | O |

The mark * designates a comparative example.

## Claims

1. A cartridge comprising a composite resin in which a filler is mixed at a ratio of 16 parts or less by volume to 100 parts by volume of the resin, and which has a specific gravity of 1.8 or more.

2. The cartridge according to claim 1, wherein said filler is tungsten powder.

3. The cartridge according to claim 1, wherein said filler is stainless steal powder.

4. The cartridge according to claim 1, wherein said filler is a powder of an element or compound having a specific gravity of 6.5 or more.

5. The cartridge according to claim 1, wherein the average particle size of said filler is in a range of 1 to 20 µm.

6. The cartridge according to claim 5, wherein the maximum particle size of the filler is 50 µm.

7. The cartridge according to claim 1, wherein a surface of said filler is surface-treated with a lubricant, a silane coupling agent or a titanium coupling agent.

## Patentansprüche

1. Kassette, umfassend ein Kompositharz, in welchem ein Füllstoff in einem Verhältnis von 16 Volumenteilen oder weniger pro 100 Volumenteile des Harzes zugemischt ist, und welcher eine spezifische Dichte von 1,8 oder mehr hat.

2. Kassette gemäß Anspruch 1, worin der Füllstoff Wolframpulver ist.

3. Kassette gemäß Anspruch 1, worin der Füllstoff rostfreies Stahlpulver ist.

4. Kassette gemäß Anspruch 1, worin der Füllstoff ein Pulver eines Elementes oder einer Verbindung mit einer spezifischen Dichte von 6,5 oder mehr ist.

5. Kassette gemäß Anspruch 1, worin die durchschnittliche Partikelgröße des Füllstoffs im Bereich von 1 bis 20 µm ist.

**6.** Kassette gemäß Anspruch 5, worin die maximale Partikelgröße des Füllstoffs 50 µm ist.

**7.** Kassette gemäß Anspruch 1, worin eine Oberfläche des Füllstoffs mit einem Schmiermittel, einem Silankupplungsmittel oder einem Titankupplungsmittel oberflächenbehandelt ist.

**Revendications**

**1.** Cassette comprenant une résine composite dans laquelle une charge est mélangée selon un rapport de 16 parties ou moins en volume à 100 parties en volume de la résine, et qui a une densité de 1,8 ou plus.

**2.** Cassette selon la revendication 1, dans laquelle ladite charge est de la poudre de tungstène.

**3.** Cassette selon la revendication 1, dans laquelle ladite charge est de la poudre d'acier inoxydable.

**4.** Cassette selon la revendication 1, dans laquelle ladite charge est une poudre d'un élément ou d'un composé ayant une densité de 6,5 ou plus.

**5.** Cassette selon la revendication 1, dans laquelle la dimension moyenne des particules de ladite charge est dans la gamme de 1 à 20 µm.

**6.** Cassette selon la revendication 5, dans laquelle la dimension maximale des particules de la charge est de 50 µm.

**7.** Cassette selon la revendication 1, dans laquelle une surface de ladite charge est revêtue d'un lubrifiant, d'un agent de pontage au silane ou d'un agent de pontage au titane.

FIG. 1

FIG. 2

8

## FIG. 3

## FIG. 4